# EUROPÄISCHE PATENTANMELDUNG

(11) **EP 1 928 073 A2**
(43) Veröffentlichungstag der Anmeldung: **04.06.2008**
(21) Anmeldenummer: 07022647.7
(22) Anmeldetag: 22.11.2007
(51) Int. Cl.: H02K 1/28, H02K 21/24

(54) **Bürstenlose elektrische Maschine**

(30) Priorität: 01.12.2006 DE 102006056745; 08.02.2007 DE 102007006270
(71) Anmelder: LuK Lamellen und Kupplungsbau Beteiligungs KG, 77815 Bühl (DE)
(72) Erfinder: Burkhart, Dirk, 76889 Klingenmünster (DE); Speck, Andre, 76316 Malsch (DE); Kuckuk, Andre, 91074 Herzogenaurach (DE); Kern, Ludwig, 91056 Erlangen (DE)

(57) **Zusammenfassung**

Die Erfindung betrifft die Lagerung eines Rotors einer als Scheibenläufermotor ausgebildeten bürstenlosen elektrischen Maschine, deren in einem Gehäuse gelagerter Rotor aus einer Rotorwelle und einer auf dieser fixierter Permanentmagnetscheibe gebildet wird, bei der zur Erhöhung der Leistungsdichte des Magnetfeldes die Lagerung des Rotors mindestens unmittelbar im Bereich des Innendurchmessers der Permanentmagnetscheibe erfolgt, wobei die Permanentmagnetscheibe auf der Rotorwelle axial verklemmt ist.

## Beschreibung

Die Erfindung betrifft eine bürstenlose elektrische Maschine, die als Scheibenläufermotor ausgebildet ist, gemäß dem Oberbegriff des Anspruchs 1.

Ein derartiger Scheibenläufermotor, bei dem die Magnetpole von einer auf einer Welle angeordneten Magnetscheibe gebildet werden, die als Zwischenläufer zwischen zwei Statorhälften angeordnet ist, ist aus dem Stand der Technik bekannt. So zeigt die EP 1 612 913 A2 einen Scheibenläufermotor mit einer Dauermagneterregung und einer Ladewicklung. In Umfangsrichtung wechseln entgegengesetzt zueinander magnetisierte Magnetpole einander ab. Zwischen der Magnetscheibe und den Statorhälften ist beidseits der als Rotor ausgebildeten Magnetscheibe zur Ausführung einer Rotationsbewegung jeweils ein axial von einem Magnetfluss durchsetzter Luftspalt vorgesehen. Die Statorhälften haben einen weichmagnetischen Kern mit Nuten, die mit Wicklungsspulen umwickelt sind. Sowohl die Statorhälften als auch der Rotor sind im Bereich der Rotorwelle mir dem Gehäuse fest verbunden.

Aus der DE 39 01 295 C1 ist ebenfalls eine Lösung für einen Gleichstrom-Scheibenläufermotor entnehmbar. Bei dieser Lösung begrenzen die Magnetpole der Statorhälften mit ihren gegenüberliegenden Stirnseiten einen Spalt, in den der scheibenförmige Rotor mit seinem schmalen Querschnitt hineintaucht. Dieser ist über eine Hohlwelle mit der Antriebselle verbunden. Der zur Ausführung der Rotationsbewegung des Rotors benötigte Luftspalt wird hierbei durch die Länge der Hohlwelle und der an den Jochwänden des Gehäuses angebrachten Statorhälften bestimmt. Die Welle wird mittels beidseitig in den Jochwänden des Gehäuses angeordneten und an der Hohlwelle anliegenden Axiallagern gelagert.

Für eine hohe Feldliniendichte und damit eine hohe Leistungsdichte einer elektrischen Maschine, in diesem Falle eines Scheibenläufermotors, ist ein möglichst kleiner Luftspalt zwischen als Scheibe ausgebildetem Rotor und Stator anzustreben. Die Größe des Luftspaltes wird größtenteils durch Toleranzen beeinflusst, die aus dem Lagersitz der Scheibe herrühren. So können beispielsweise radiale Lagersitztoleranzen zum Taumeln der Scheibe führen. Die Größe des Luftspaltes wird außerdem bestimmt durch die axiale Steifigkeit der Scheibe. Weiterhin führen die magnetischen Kräfte oder über die Rotorwelle von außen eingebrachte Querkräfte und Biegemomente zu elastischen Verformungen, insbesondere der Lager. Dadurch kommt es ebenfalls zu einer Schiefstellung der Scheibe, die bei der Auslegung des Luftspaltes zu berücksichtigen ist.

Daher besteht die Aufgabe der Erfindung darin, eine elektrische Maschine der eingangs genannten Art so auszuführen, dass die Leistungsdichte des Magnetfeldes erhöht wird und deren Herstellung kostengünstig ist.

Diese Aufgabe wird durch eine erfindungsgemäße elektrische Maschine mit den Merkmalen des Anspruchs 1 gelöst. Diese als Scheibenläufermotor ausgebildete elektrische Maschine weist einen in einem Gehäuse gelagerten Rotor auf, der aus einer Rotorwelle mit einer auf dieser fixierten Permanentmagnetscheibe besteht. Die Stirnseiten der Permanentmagnetscheibe sind zur Erhöhung der Steifigkeit und der magnetischen Flussdichte mit Deckblechen versehen. Ebenfalls sind auf der Rotorwelle Statorhälften gelagert, die jeweils stirnseitig einen Luftspalt bildenden axialen Abstand zur Permanentmagnetscheibe aufweisen, der die Größe des Luftspaltes definiert.

Zur Positionierung der Permanentmagnetscheibe auf der Rotorwelle ist die Rotorwelle an dieser Stelle mit einem Bund versehen, der als Anschlag für die Permanentmagnetscheibe bzw. des an dieser anliegenden Deckbleches dient. Durch ein endseitig auf der Rotorwelle aufgeschnittenes Gewinde ist es möglich, mittels einer aus einer Gewindemutter bestehende Verstelleinrichtung zwischen dieser und dem Anschlag die Permanentmagnetscheibe einzuklemmen. Zur Arretierung der Position der Gewindemutter ist die Gewindemutter mit einer Verdrehsicherung versehen. Der Klemmkontakt der Permanentmagnetscheibe zwischen dem Wellenbund und der Gewindemutter erfolgt über einen Reibschluss.

Besonders vorteilhaft ist es, an der Seite zwischen Verstelleinrichtung und Deckblech der Permanentmagnetscheibe ein federndes Element in Form beispielsweise einer Druck- oder Tellerfeder vorzusehen, so dass eine zusätzliche Spannung in axialer Richtung erzielt wird. Die Permanentmagnetscheibe sollte dazu vorzugsweise mit einer Spiel- oder Übergangspassung auf der Rotorwelle sitzen.

Weitere Vorteile und vorteilhafte Weiterbildungen der Erfindung sind Gegenstand der nachfolgenden Figuren sowie deren Beschreibungsteile.

Es zeigen:
- Figur 1: eine Schnittdarstellung einer Positionierung der Magnetscheibe auf der Rotorwelle mit einer weiteren Ausgestaltung der Rotorlagerung,
- Figur 2: eine Schnittdarstellung der Positionierung der Magnetscheibe auf der Rotorwelle mit einer weiteren Möglichkeit der Rotorlagerung.

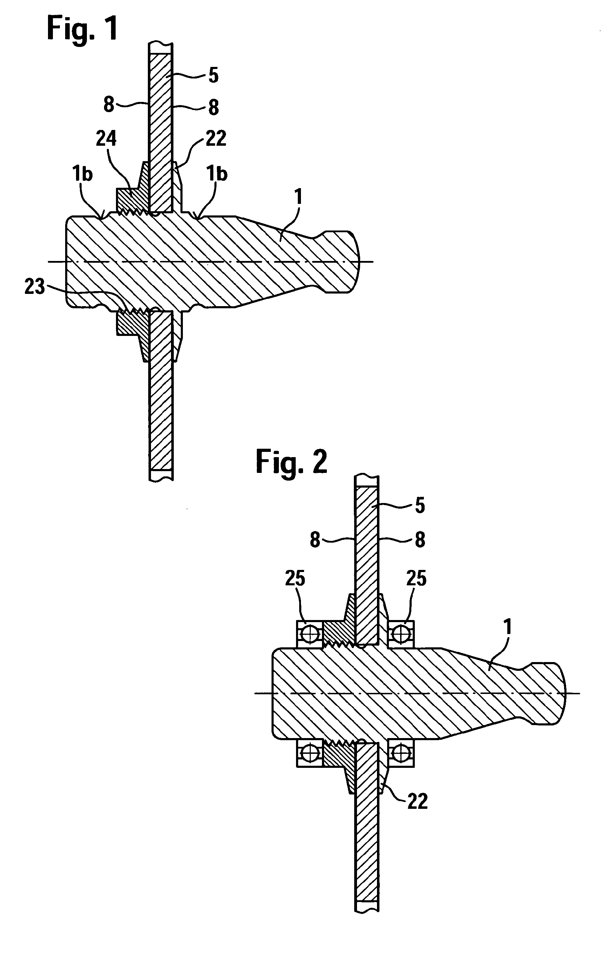

Aus den Figuren 1 und 2 ist nur der Rotor, d. h. die Rotorwelle 1 mit der auf dieser angeordneten Permanentmagnetscheibe 5 eines Scheibenläufermotors im Schnitt ersichtlich, die jeweils von Deckblechen 8 stirnseitig umgeben ist. Dabei wird die Arretierung der Permanentmagnetscheibe 5 auf der Rotorwelle 1 erkennbar, die mittels eines an der Rotorwelle 1 angebrachten, als Anschlag fungierenden Bundes 22 realisiert wird, gegen den die Permanentmagnetscheibe 5 durch eine Verstelleinrichtung 24 in Form einer Gewindemutter kraftschlüssig verspannt wird. Mittels dieser Verstelleinrichtung 24 ist gleichzeitig auch der gewünschte Luftspalt 20 einstellbar, wobei diese gegen Verdrehung zu sichern ist. Dazu ist die Rotorwelle 1 einseitig mit einem Gewinde 23 versehen. Dabei wird die Permanentmagnetscheibe 5 mit den Deckblechen 8 zwischen dem Wellenbund 22 und der Gewindemutter 24 reibschlüssig verklemmt. Besonders vorteilhaft ist es, zusätzlich eine Spannung in axialer Richtung auf die Klemmstelle aufzubringen, indem zwischen der Gewindemutter 24 und der Permanentmagnetscheibe 5 ein Federelement in Form beispielsweise einer Druck- oder Tellerfeder eingebracht wird. Die Permanentmagnetscheibe 5 und die diese umgebenden Deckbleche 8 sitzen vorzugsweise mit einer Spiel- oder Übergangspassung auf der Rotorwelle 1.

In Figur 1 wird der Rotor gelagert, indem beidseitig der arretierten und verspannten Permanentmagnetscheibe 5 in die Rotorwelle 1 Lagerlaufbahnen 1 b eingearbeitet sind, wodurch die Rotorwelle 1 als innere Lagerschale für ein entsprechendes Lager fungiert. Die äußeren Lagerschalen dazu werden lagepositioniert entweder in die nicht dargestellte Gehäuseschale eingearbeitet oder von herkömmlichen, ebenfalls nicht dargestellten Lagern gebildet.

Die Figur 2 zeigt eine alternative Lösung der Rotorlagerung zu Figur 1, bei der herkömmliche Standardlager 25 einsetzbar sind. Diese werden beidseitig der Permanentmagnetscheibe 5 auf die Rotorwelle 1 aufgeschoben.

### Bezugszeichenliste

- 1: Rotorwelle
- 1b: Lagerlaufbahn
- 5: Permanentmagnetscheibe

- 8: Deckblech

- 21: Anschlag
- 22: Bund
- 23: Gewinde
- 24: Verstelleinrichtung / Gewindemutter
- 25: Standardlager

## Patentansprüche

1. Elektrische Maschine, die als Scheibenläufermotor ausgebildet ist, mit einem in einem Gehäuse gelagerten Rotor, der aus einer Rotorwelle (1) mit einer auf dieser fixierten Permanentmagnetscheibe (5) besteht, deren Stirnseiten von Deckblechen (8) abgedeckt werden, wobei die Permanentmagnetscheibe (5) zu ebenfalls auf der Rotorwelle (1) angeordneten Statorhälften jeweils stirnseitig einen Luftspalt bildenden axialen Abstand aufweist und die Rotorwelle (1) jeweils mittels am Gehäuse vorgesehenen Wälzlagern gelagert ist, **dadurch gekennzeichnet, dass** die Permanentmagnetscheibe (5) auf der Rotorwelle (1) axial verklemmt ist.

2. Elektrische Maschine nach Anspruch 1, **dadurch gekennzeichnet, dass** die Rotorwelle (1) im Bereich der Permanentmagnetscheibe (5) mit einem Bund (22) versehen ist.

3. Elektrische Maschine nach Anspruch 1, **dadurch gekennzeichnet, dass** die Rotorwelle (1) einseitig ein Gewinde (23) zur Aufnahme einer Verstelleinrichtung (24) aufweist.
